# EUROPEAN PATENT SPECIFICATION

(11) **EP 4 241 530 B1**
(45) Date of publication and mention of the grant of the patent: **14.08.2024**
(21) Application number: 21811668.9
(22) Date of filing: 29.10.2021
(51) Int. Cl.: H04W 76/10, H04W 48/18, H04W 4/50, H04W 76/12, H04W 88/14, H04W 92/24

(54) **NETWORK SLICING**
NETZWERK-SLICING
DÉCOUPAGE DE RÉSEAU

(30) Priority: 04.11.2020 GB 202017468
(43) Date of publication of application: 13.09.2023
(73) Proprietor: Metaswitch Networks Ltd, Enfield, Middlesex EN2 6BQ (GB)
(72) Inventor: WILLIAMS, Matthew Ian Ronald, Enfield, Middlesex EN2 6BQ (GB); TREGENZA DANCER, Colin, Enfield, Middlesex EN2 6BQ (GB); TAYLOR, Martin, Enfield, Middlesex EN2 6BQ (GB); REEKIE, David, Enfield, Middlesex EN2 6BQ (GB); HEWITT, Richard, Enfield, Middlesex EN2 6BQ (GB)
(74) Representative: CMS Cameron McKenna Nabarro Olswang LLP
(86) International application number: PCT/US2021/057273
(87) International publication number: WO 2022/098577

(56) References cited:
- SAJJAD MUHAMMAD MOHTASIM ET AL: "On Session Continuation among Slices for Inter-Slice Mobility Support in 3GPP Service-based Architecture", 2020 IEEE 31ST ANNUAL INTERNATIONAL SYMPOSIUM ON PERSONAL, INDOOR AND MOBILE RADIO COMMUNICATIONS, IEEE, 31 August 2020 (2020-08-31), pages 1 - 7, XP033837668, DOI: 10.1109/PIMRC48278.2020.9217332
- AAPO POUTANEN: "Mobile Network User Plane Switching Using Linux", 20 April 2018 (2018-04-20), XP055610989, Retrieved from the Internet <URL:https://pdfs.semanticscholar.org/8853/3a99e41cb000576e286ce159a2019206eff6.pdf> [retrieved on 20190805]

## Description

### Technical Field

The present disclosure relates to network slicing.

### Background

Network slicing allows a network operator to divide up their network into different network slices (also referred to as "slices"). The operator can assign specific users or classes of users to each slice. Network functions (NFs) comprising a network slice may be placed in different locations in a network (for example, nearer the network edge), may be configured or tuned for different traffic profiles, and/or may be implemented by different vendors from those in other slices. 3rd Generation Partnership Project (3GPP) TR 28.801 provides a study on management and orchestration of network slicing for next generation networks.

SAJJAD MUHAMMAD MOHTASIM ET AL, "On Session Continuation among Slices for Inter-Slice Mobility Support in 3GPP Service-based Architecture", 2020 IEEE 31ST ANNUAL INTERNATIONAL SYMPOSIUM ON PERSONAL, INDOOR AND MOBILE RADIO COMMUNICATIONS, IEEE, 31 August 2020, pages 1-7, DOI: 10.1109/PIMRC48278.2020.9217332 describes the Return RoutabilityBinding Update (RR/BU) procedure of the Internet standard, Mobile IPv6 (MIPv6). Mohtasim et al further describes techniques based on the 3GPP standard GPRS Tunnelling Protocol User Plane (GTPv1-U), which establishes a GTP tunnel between previous and new slice for session continuation. Mohtasim et al further describes a hybrid technique of both MIPv6-RR/BU and GTPv1-U protocols. Mohtasim et al further describes compares the performance of all three techniques through analytical modelling.

AAPO POUTANEN: "Mobile Network User Plane Switching Using Linux", 20 April 2018: URL: https://pdfs.semanticscholar.org/8853/3a99e41cb000576e286ce159a2019206eff6.pdf describes a prototype to increase modularity in the mobile packet core responsible for forwarding user data in a network. The prototype separates users from each other with common computer hardware with network elements implemented in software. The system is evaluated with the prototype in a test cellular network established in the laboratory. A monitoring system for compute resources available is implemented in the prototype, and data is analyzed.

### Summary

The invention is set out in the appended set of claims.

According to first embodiments, there is provided a network configured to perform network slicing, the network comprising:
a user plane function, UPF, instance configured to serve a plurality of network slices; and
a plurality of UPF gateway instances, a given UPF gateway instance being configured to serve a given network slice and to:
   receive information from a Session Management Function, SMF, relating to a given packet data session belonging to the given network slice; and
   based on the information received from the SMF, signal to the UPF instance that the given packet data session belongs to the given network slice.

According to second embodiments, there is provided a network configured to perform network slicing, the network comprising:
a session management function, SMF; and
a user plane function, UPF, instance configured to serve a plurality of network slices,
wherein the SMF is configured to signal, to the UPF instance, information relating to a given packet data session belonging to a given network slice served by the UPF instance, and
wherein the UPF instance is configured to identify that the packet data session belongs to the given network slice based on the signalling of the information.

Further features and advantages will become apparent from the following description, given by way of example only, which is made with reference to the accompanying drawings.

### Brief Description of the Drawings

Figure 1 shows a schematic block diagram representing an example of a network;
Figure 2 show a sequence diagram representing an example of a method implemented in the example network shown in Figure 1;
Figure 3 shows a schematic block diagram representing another example of a network;
Figure 4 shows a schematic block diagram representing another example of a network;
Figure 5 shows a schematic block diagram representing another example of a network;
Figure 6 shows a schematic block diagram representing part of the example network shown in Figure 5;
Figure 7 shows a schematic block diagram representing another example of a network;
Figure 8 shows a schematic block diagram representing part of the example network shown in Figure 7; and
Figures 9A and 9B show a sequence diagram representing an example of a method implemented in the example network shown in Figure 7.

### Detailed Description

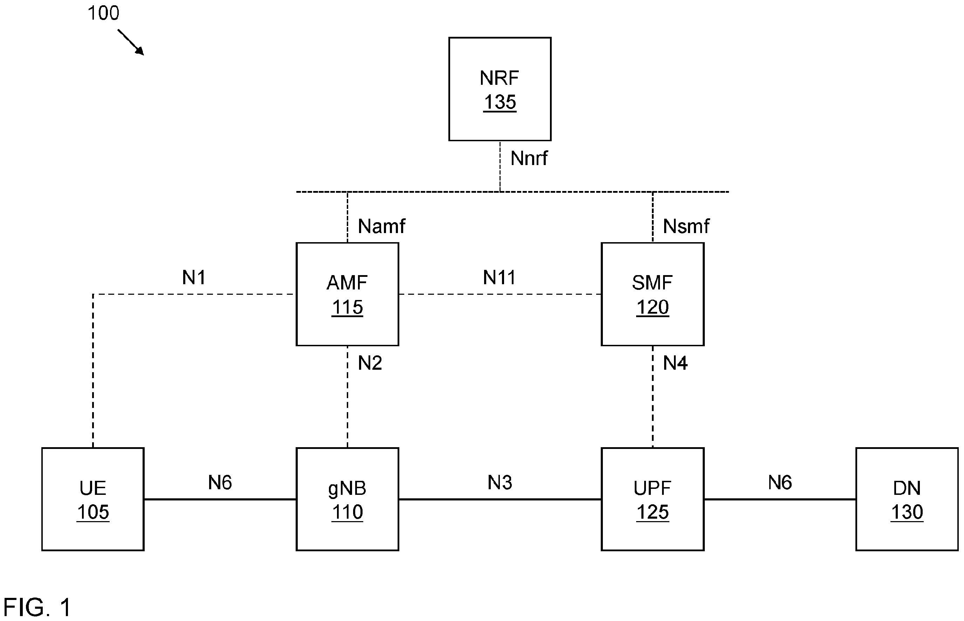

Referring to Figure 1, there is shown an example of a network 100.

In this example, the network 100 is in accordance with a Service-Based Architecture (SBA). SBA provides a modular framework from which common applications can be deployed using components of varying sources and suppliers. 3GPP defines SBAs, whereby the control plane functionality and common data repositories of a 5G network are delivered by way of a set of interconnected NFs, each with authorisation to access each other's services.

The network 100 comprises a User Equipment (UE) 105. In practice, the network 100 may comprise many UEs 105.

The UE 105 uses an Access Network (AN) to access services in the network 100. In this example, the AN comprises a Radio Access Network (RAN). In this example, the RAN comprises a gNodeB (gNB) 110.

The network 100 comprises a 5G Core Access and Mobility Management Function (AMF) 115, which receives connection-related information and session-related information from the UE 105, via an N1 or N2 interface. The AMF 115 is responsible for handling connection and mobility management tasks, and forwards messages related to session management over the N11 reference interface to a Session Management Function (SMF) 120.

The 5G SMF 120 is primarily responsible for interacting with the decoupled data plane (also known as "user plane"), creating, updating and removing Protocol Data Unit (PDU) sessions and managing session context with a User Plane Function (UPF) 125.

The UPF 125 serves, amongst other things, as an interconnect point between the mobile infrastructure and a Data Network (DN) 130. In this example, three distinct reference points of the UPF 125 are shown, namely: an N3 interface between the RAN (gNB 110) and the UPF 125, an N4 interface between the SMF 120 and the UPF 125, and an N6 interface between the UPF 125 and the DN 130.

In this example, the network 100 comprises a NF Repository Function (NRF) 135. With NFs built using microservice methodologies, the 5G SBA may evolve into a complete service mesh with service discovery, load balancing, encryption, authentication and authorisation, employing a sidecar for interservice communication. Currently, however, the SBA employs a centralised discovery framework that leverages the NRF 135. The NRF 135 maintains a record of available NF instances and their supported services. The NRF 135 allows other NF instances to subscribe and to be notified of registrations from NF instances of a given type. The NRF 135 supports service discovery, by receipt of Discovery Requests from NF instances, and details which NF instances support specific services.

In examples described herein, one or more instances of an NF (which may be referred to as "NF instances") provide the functionality associated with the NF itself. For example, UPF functionality is provided by one or more UPF instances. References to a particular NF should be understood to be to one or more NF instances providing the functionality of the NF should the context indicate such.

At least some elements of the network 100 may comprise, or may be implemented using, one or more processors and one or more memories. One or more computer programs comprising computer-readable instructions may be stored in the one or more memories. The one or more processors may be configured to execute the computer-readable instructions and perform at least some of the methods and techniques described herein as result.

In examples described herein, a network operator has divided up their network into two different slices. However, a different number of network slices may be used in other examples.

In addition, in examples described herein, network slicing is used for reasons of tuning the network 100 for different traffic profiles relating to different types of traffic. Examples of traffic types include, but are not limited to, enhanced Mobile Broadband (eMBB), Ultra-Reliable Low-Latency Communications (URLLC) and massive Machine Type Communications (mMTC). eMBB is high bandwidth, URLLC is low-latency and mMTC involves a large number of generally low-bandwidth UEs. However, in other examples, network slicing is used for one or more alternative or additional reasons, examples of which include, but are not limited to, different locations and/or owing to different vendors.

In more detail, network slicing allows multiple (virtual) networks to run over the same (physical) resources. Possible motivations for network slicing include, but are not limited to, Quality of Service (QoS)-related and administration-related. QoS-related use cases are where a single network operator has different types of users, for example eMBB, mMTC and URLLC. Per-session QoS can provide some latency reductions for example. However, it can be difficult in practice to achieve very low latency from an NF, such as UPF, designed for high-bandwidth traffic. Network slicing can be used to help achieve lower latency. Administration-related use cases are where multiple network operators share the same network, for example in the case of a Mobile Virtual Network Operator (MVNO) which runs over the top of another network. MVNOs were possible in 3G and 4G, but it was not possible, at least in a standards-compliant way, for the network operator to reserve explicit resources for the MVNO. If MVNO users tried to use large amounts of data, that might reduce the amount available to other users of the network.

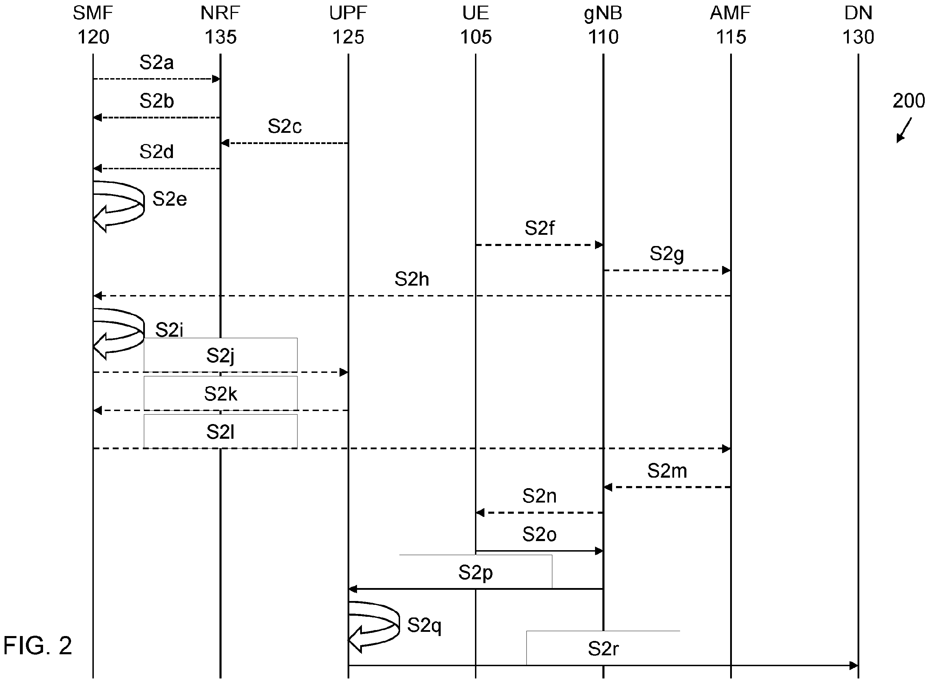

Referring to Figure 2, there is shown an example of a method 200. In this example, the method 200 is implemented in the example network 100.

It is assumed that, before item S2a, the UPF instance 125 (which provides UPF functionality) has not yet been deployed in the network 100. At item S2a, the SMF 120 subscribes with the NRF 135 to be notified of any UPF instances in the network 100 that match target UPF Provisioning Information the SMF 120 is interested in. The target UPF Provisioning Information may identify one or more network slices, for example using one or more Single Network Slice Selection Assistance Information (S-NSSAI) identifiers. An S-NSSAI indicates a Slice/Service Type (SST), such as eMBB, mMTC or URLLC.

At item S2b, the NRF 135 notifies the SMF 120 of any existing UPF instances in the network 100 meeting the target Provisioning Information in the SMF's subscription. The notification indicates the subset of the target Provisioning Information each such existing UPF instance supports.

Items S2a and S2b may involve the SMF 120 issuing an Nnrf_NFManagement_NFStatusSubscribe Service Operation and the NRF 135 issuing Nnrf_NFManagement_NFStatusNotify as specified in 3GPP TS 23.502, clause 4.17.6.

Items S2c to S2e, correspond to SMF 120 provisioning of the UPF instance 125 using the NRF 135.

At item S2c, the UPF instance 125 is deployed in the network 100 and is initially configured with (i) an identity of the NRF 135 (which may be referred to as an "NRF identity") to contact for registration, and (ii) UPF Provisioning Information of the UPF instance 125. In this example, the UPF Provisioning Information identifies one or more network slices supported by the UPF instance 125, for example using one or more S-NSSAIs. For example, with reference to 3GPP TS 29.510, clauses 6.1.6.1 and 6.1.6.2.13, a "Upflnfo" data type is defined for the Nnrf_NFManagement service-based interface protocol and includes an "sNssaiUpflnfoList" attribute, which lists parameters supported by a UPF instance per S-NSSAI. In this example, the UPF Provisioning Information also identifies a network address of the N3 interface of the UPF instance 125, which in this example is an IP address. The UPF instance 125 then registers with the NRF 135 by providing the NRF 135 with (i) the NF type of the UPF instance 125 (the NF type being UPF in this example), (ii) the FQDN or IP address (examples of network addresses) of the N4 interface of the UPF instance 125, and (iii) the UPF Provisioning Information.

As an alternative to the UPF instance 125 registering with the NRF 135, Operations, Administration and Maintenance (OAM) (not shown) may register the UPF instance 125 on the NRF 135 by indicating the same UPF Provisioning Information that would be provided by the UPF instance 125.

At item S2d, the NRF 135 notifies all SMFs in the network 100 with subscriptions matching the UPF Provisioning Information of the UPF instance 125 which, in this example, includes the SMF 120. The notification of item S2d identifies one or more target network slices of interest to the SMF 120 that the UPF instance 125 also supports, for example using one or more S-NSSAIs.

At item S2e, the SMF 120 associates the network slice(s) supported by the UPF instance 125 with the UPF instance 125.

Items S2c to S2e may involve the UPF instance 125 issuing a Nnrf_NFMManagement_NFRegister operation (which uses Nnrf_NFManagement and not the N4 interface) to register with the NRF 135 and the NRF 135 issuing Nnrf_NFManagement_NFStatusNotify as specified in 3GPP TS 23.502, clause 4.17.6.

Items S2f to S2r, correspond to the UE 105 establishing a new PDU session. In this example, the new PDU session is established in accordance with 3GPP TS 23.502, clause 4.3.2.2.

At items S2f and S2g, the UE 105 initiates a UE-requested PDU session establishment procedure by transmitting a PDU Session Establishment Request to the AMF 115 via the gNB 110. Other types of procedure relating to PDU sessions are possible, an example of which is a PDU session modification procedure.

At item S2h, the AMF 115 selects an SMF for the new PDU session, which in this example is the SMF 120. In this example, the SMF 120 is selected at least on the basis that it serves a given network slice to which the PDU session is to relate. The UE 105 may identify the given network slice or the SMF 120 may become aware of the given network slice in another manner. The AMF 115 informs the SMF 120 of its selection and exchanges other information with the SMF 120.

At item S2i, the SMF 120 selects a UPF instance for the new PDU session, which in this example is the UPF instance 125. In this example, the UPF instance 125 is selected at least on the basis that it serves the given network slice.

At items S2j and S2k, the SMF 120 and UPF instance 125 exchange information over the N4 interface related to establishment of the PDU session. This may involve the SMF 120 providing one or more packet processing rules to be used by the UPF instance 125 for this PDU session. The UPF instance 125 can store the packet processing rule(s) in association with an identifier for this particular PDU session. As explained above, the UPF instance 125 has previously indicated, during registration with the NRF 135, a network address for its N3 interface, which is later used by the gNB 110 to send uplink packet data to the UPF instance 125.

In this example, the SMF 120 selects a single UPF instance (namely, the UPF instance 125) for the PDU session. If multiple UPF instances were selected, the SMF 120 would exchange information related to establishment of the PDU session with each selected PDU instance.

At items S2l to S2n, information for establishing the PDU session is conveyed between the SMF 120, the AMF 115, the gNB 110 and the UE 105.

At items S2o and S2p, the UE 105 sends uplink packet data to the UPF instance 125 via the gNB 110. The gNB 110 uses the network address of the N3 reference point of the UPF instance 125 to direct the traffic to the UPF instance 125. At item S2q, the UPF instance 125 processes the uplink packet data. In examples, the uplink packet data is accompanied by an identifier for the PDU session, the UPF instance 125 retrieves the packet processing rule(s) associated with the identifier for the PDU session and processes the uplink packet data with the packet processing rule(s) provided by the SMF 120. At item S2r, the UPF instance 125 outputs the uplink packet data to the DN 130.

In examples, the UPF instance 125 gives the IP address or FQDN of its N4 interface at registration time. In addition, a `CN Tunnel Info' identifier is allocated when the PDU session is established. CN Tunnel Info may take the form of a Fully-Qualified Tunnel Endpoint ID (F-TEID). An F-TEID has two parts, namely the N3 address of the UPF instance 125, which in this example is an IP address, and the TEID itself, which in examples is a 32-bit integer. The F-TEID of the UPF instance 125 is sent, via the SMF 120 and AMF 115, to the gNB 110. The gNB 110 also allocates an F-TEID of its own, which is sent to the UPF instance 125, again via the AMF 115 and SMF 120. Per 3GPP TS 29.244, clause 5.5, the SMF 120 can allocate F-TEIDs (which may be known as "CP Function") and the UPF instance 125 may be able to allocate F-TEIDs (which may be known as "UP Function"). When the SMF 120 allocates F-TEIDs, it learns the N3 (IP) address of the UPF instance 125 from the UPF Provisioning Information that the UPF instance 125 provides to the NRF 135 at registration, and selects the TEID from a pool it manages itself.

With reference to item S2q described above, in examples the identifier for the PDU session comprises the TEID, which identifies the particular PDU session and, from there, the relevant packet-processing rule(s). Although this example relates to uplink packet data, in other examples, the UPF instance 125 processes downlink packet data destined for the UE 105. A destination IP address may be used to identify the particular PDU session in such examples.

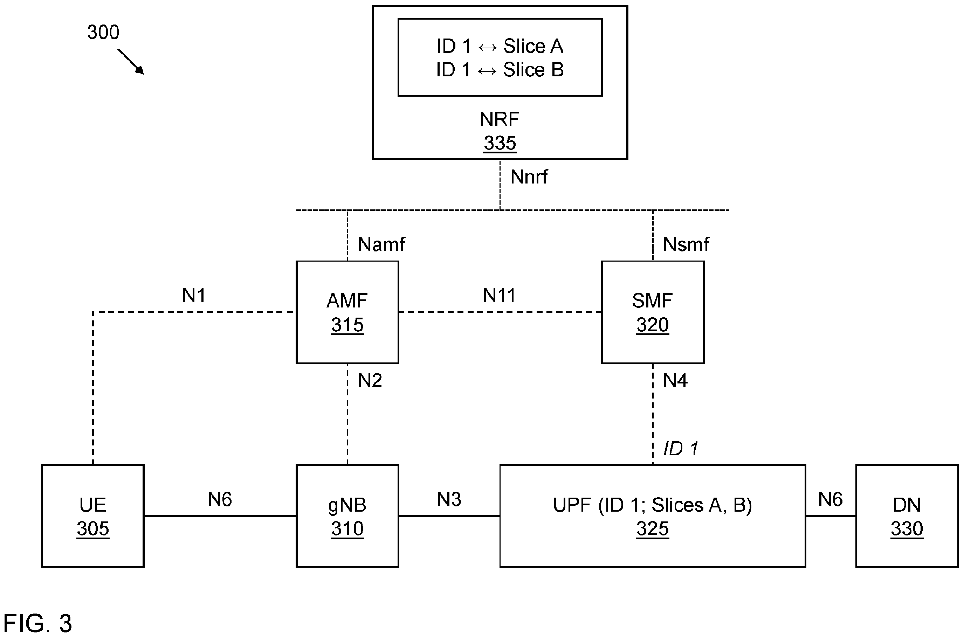

Referring to Figure 3, there is shown another example of a network 300.

The example network 300 comprises elements that are the same as or correspond closely to corresponding elements of the example network 100 described above with reference to Figure 1. Such elements are indicated using the same reference numerals but incremented by 200.

There is a perception in the art that a UPF instance can serve multiple slices, but that since it could not differentiate between the slices, it could not serve different service types (such as eMBB or URLLC) efficiently at the same time or could not constrain resources per-slice. The perception in the art is that a UPF instance serving multiple slices would therefore not be particularly effective.

In this example, however, the UPF instance 325 has been configured to serve two network slices (in this example, network slices A and B). The UPF instance 325 may therefore be considered to be a "multi-slice" UPF instance. As will be explained in more detail below, the inventors have identified that multi-slice UPF instances can perform surprisingly well.

The NRF 335 has registered an association between a network address of the N4 reference point of the UPF instance 325 (in this example, ID 1) and the two network slices served by the UPF instance 325. The NRF 335 has notified the SMF 320 of the network slice(s) served by the UPF instance 325 dependent on the network slice(s) of interest to the SMF 320 in accordance with the SMF's subscription. As such, the UPF instance 325 can be selected for packet data belonging to network slice A and for packet data belonging to network slice B, on the basis of its registration with the NRF 335.

However, although the N4 interface (a standardised interface) allows the SMF 320 to indicate an identifier to the UPF instance 235 for a given PDU session, the N4 interface does not allow the SMF 320 to indicate which network slice(s) the given PDU session actually belongs to. References herein to a PDU session belonging to a network slice should be understood to encompass both a network slice to which a PDU session will belong when established, and a network slice to which an already-established PDU session does belong. As such, even though the UPF instance 325 could receive packet data belonging to network slice A and packet data belonging to network slice B (via the N3 interface of the UPF instance 325), the UPF instance 325 would not know for each user or session which of network slices A and B given packet data belongs to and therefore which network slice it should act as. As such, the UPF instance 325 could not process such packet data effectively.

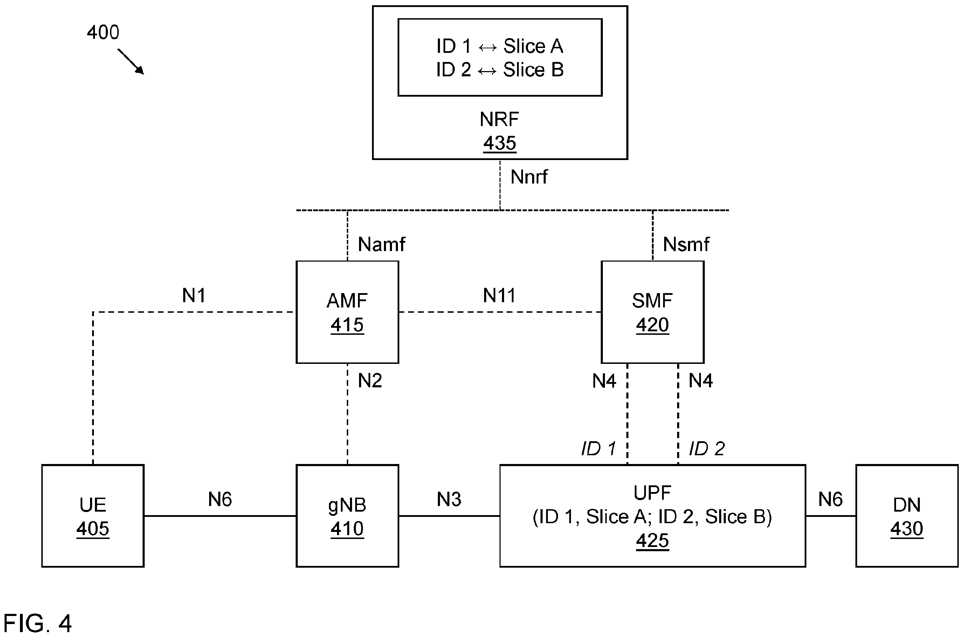

Referring to Figure 4, there is shown another example of a network 400.

The example network 400 comprises elements that are the same as or correspond closely to corresponding elements of the example network 100 described above with reference to Figure 1. Such elements are indicated using the same reference numerals but incremented by 300.

In this example, the UPF instance 425 has, again, been configured to serve two network slices (in this example, network slices A and B). In addition, the UPF instance 425 has been configured with two N4 network addresses (in this example, ID 1 and ID 2). The NRF 435 has registered a first association between the (first) N4 network address of a first N4 reference point of the UPF instance 425 (in this example, ID 1) and the first network slice served by the UPF instance 425 (in this example, Slice A). The NRF 435 has also registered a second association between the (second) N4 network address of a second N4 reference point of the UPF instance 425 (in this example, ID 2) and the second network slice served by the UPF instance 425 (in this example, Slice B). The NRF 435 has notified the SMF 420 of the network slice(s) served by the UPF instance 435 dependent on the network slice(s) of interest to the SMF 420 in accordance with the SMF's subscription. As such, the UPF instance 435 can be selected for packet data belonging to network slice A and for packet data belonging to network slice B, on the basis of its registration with the NRF 435.

Again, the N4 interface does not allow the SMF 420 to indicate to the UPF instance 425 which network slice a given PDU session belongs to. However, if the UPF instance 425 receives control-plane data via the first (or second) N4 network address, the UPF instance 425 can infer that the control-plane data belongs to the first (or second) network slice and can process user-plane data for a PDU session established based on such control-plane data accordingly, such as using the TEID as described above.

Where UPF-allocated F-TEIDs are used, the UPF instance 425 may receive user-plane data for both the first and second network slices via a single N3 IP address and determine the slice to which the user-plane data belongs based on the TEID.

As such, the UPF instance 425 could register two different N4 network addresses; one for each slice. However, in a cloud-native environment, having multiple (especially significant numbers of) network addresses owned by a single NF is unusual, and does not always come easily to orchestrators.

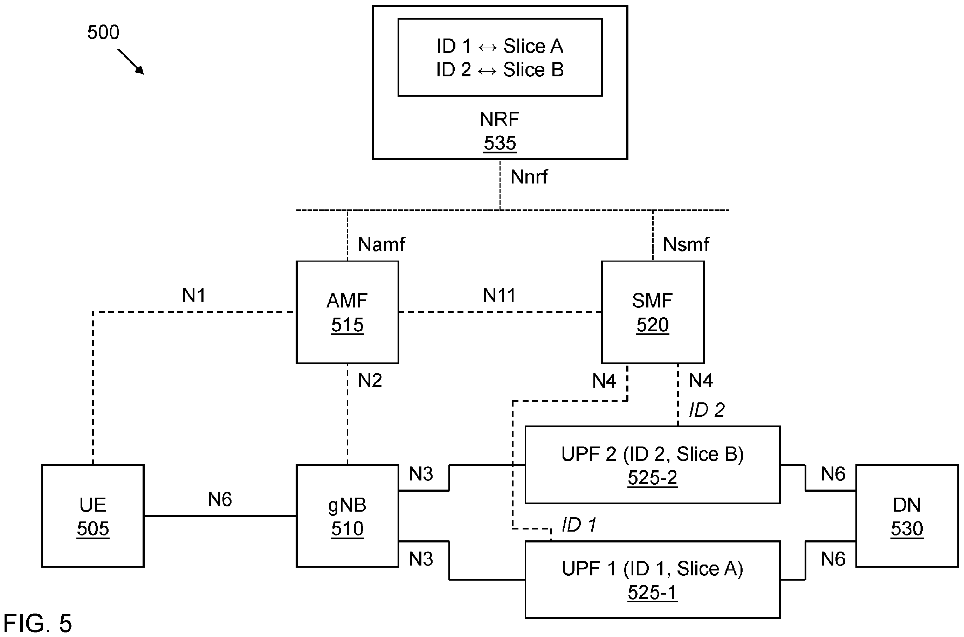

Referring to Figure 5, there is shown another example of a network 500.

The example network 500 comprises elements that are the same as or correspond closely to corresponding elements of the example network 100 described above with reference to Figure 1. Such elements are indicated using the same reference numerals but incremented by 400.

In this example, instead of a single, multi-slice UPF instance serving multiple network slices, multiple, single-slice UPF instances 525-1, 525-2 are deployed, each being configured to serve a single network slice (in this example network slices A and B respectively). The NRF 535 has registered a first association between a network address of the N4 reference point of the first UPF instance 525-1 (in this example, ID 1) and the first network slice served by the first UPF instance 525-1 (in this example, Slice A). The NRF 535 has also registered a second association between a network address of the N4 reference point of the second UPF instance 525-2 (in this example, ID 2) and the second network slice served by the second UPF instance 525-2 (in this example, Slice B). The NRF 535 has notified the SMF 520 of the network slice(s) served by the UPF instance(s) 525-1, 525-2 dependent on the network slice(s) of interest to the SMF 520 in accordance with the SMF's subscription. As such, the first UPF instance 525-1 can be selected for packet data belonging to network slice A and the second UPF instance 525-2 can be selected for packet data belonging to network slice B.

Yet again, the N4 interface does not allow the SMF 520 to indicate to the first and second UPF instances 525-1, 525-2 which network slice a given PDU session belongs to. However, since the first UPF instance 525-1 only serves the first network slice, all packet data it receives can be assumed to belong to the first network slice and can be processed accordingly. Similarly, since the second UPF instance 525-2 only serves the second network slice, all packet data it receives can be assumed to belong to the second network slice and can be processed accordingly.

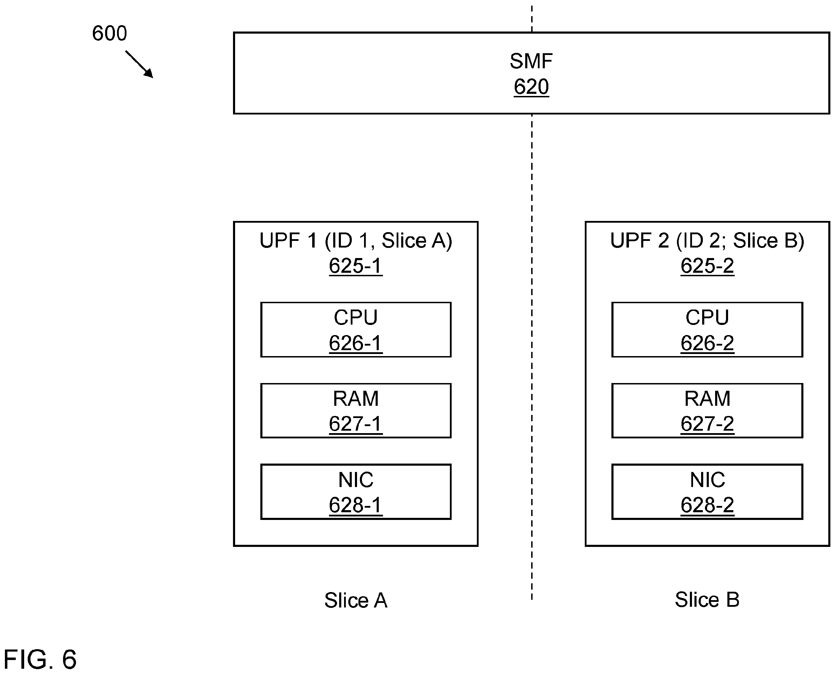

Referring to Figure 6, there is shown an example of a set of UPF instances 625 comprising first and second UPF instances 625-1, 625-2.

The example first and second UPF instances 625-1, 625-2 are the same as or correspond closely to corresponding elements of the example network 500 described above with reference to Figure 5 and are therefore indicated using the same reference numerals but incremented by 100.

The first and second UPF instances 625-1, 625-2 have access to respective processor 626-1, 626-2, memory 627-1, 627-2, and network interface 628-1, 628-2 resources. As such, in this example, the first and second network slices have respective, dedicated resources. In particular, in relation to the first UPF instance 625-1, the first network slice has a dedicated processor 626-1, dedicated memory 627-1 and a dedicated network interface 628-1. Similarly, in relation to the second UPF instance 625-2, the second network slice has a dedicated processor 626-2, dedicated memory 627-2 and a dedicated network interface 628-2. The processors 626-1, 626-2, memories 627-1, 627-2, and network interfaces 628-1, 628-2 may each correspond to a dedicated portion of a shared pool of resources.

As such, in this example, multiple UPF instances are deployed in different, respective slices. For example, Metaswitch Fusion Core^{®} can scale down to be deployed on low-specification hardware, which can facilitate such an implementation. The SMF 620 would then control each of the UPF instances 625-1, 625-2 independently.

However, the inventors have identified that allocating each of a number, N, of UPF workloads its own, dedicated processor can result in relatively high latency. As such, contrary to the perception in the art that single-slice UPF instances provide the highest degree of optimisation, the inventors have identified that a multi-slice UPF instance can surprisingly provide improved latency. However, as explained above, there can be other trade-offs with a multi-slice UPF instance in accordance with examples described above.

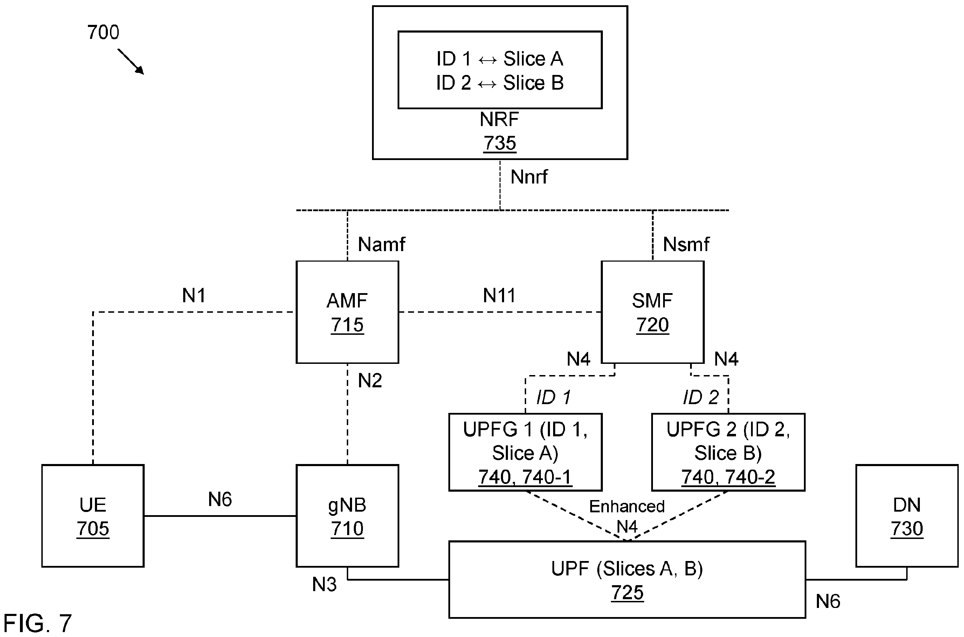

Referring to Figure 7, there is shown another example of a network 700.

The example network 700 comprises elements that are the same as or correspond closely to corresponding elements of the example network 100 described above with reference to Figure 1. Such elements are indicated using the same reference numerals but incremented by 600.

In this example, the UPF instance 725 is configured to serve a plurality of network slices. In particular, in this example, the UPF instance 725 is a multi-slice UPF instance and has been configured to serve two network slices (in this example, network slices A and B).

In this example, a UPF gateway element 740 has been deployed in the network 700. The UPF gateway element 740 comprises a plurality of UPF gateway instances 740-1, 740-2. A given UPF gateway instance 740-1, 740-2 is configured to serve a given network slice. In this example, each UPF gateway instance 740-1, 740-2 is configured to serve only one given network slice. In this example, the UPF gateway element 740 comprises two UPF gateway instances 740-1, 740-2; one for each network slice served by the UPF instance 725. The first UPF gateway instance 740-1 has been configured with a (first) N4 network address (in this example, ID 1) and has been configured to serve the first network slice. Similarly, the second UPF gateway instance 740-2 has been configured with a (second) N4 network address (in this example, ID 2) and has been configured to serve the second network slice. In this example, instead of the UPF instance 725 being registered with the NRF 735, the NRF 735 has registered the first and second UPF gateway instances 740-1, 740-2. In particular, the NRF 735 has registered a first association between the (first) N4 network address of the first UPF gateway instance 740-1 (in this example, ID 1) and the first network slice served by the first UPF gateway instance 740-1 (in this example, Slice A). The NRF 735 has also registered a second association between the (second) N4 network address of the second UPF gateway instance 740-2 (in this example, ID 2) and the second network slice served by the second UPF gateway instance 740-2 (in this example, Slice B). The NRF 735 has notified the SMF 720 of the network slice(s) served by the first and second UPF gateway instances 740-1, 740-2 dependent on the network slice(s) of interest to the SMF 720 in accordance with the SMF's subscription. As such, the first UPF gateway instance 740-1 can be selected for a PDU session belonging to network slice A and the second UPF gateway instance 740-2 can be selected for a PDU session belonging to network slice B.

In this example, the network 700 comprises a control-plane part and a user-plane part. The first and second UPF gateway instances 740-1, 740-2 are in the control-plane part of the network 700, are for control-plane traffic (exchanged with the SMF 720), and are not for user-plane traffic. In particular, the UPF instance 725, and not the first and second UPF gateway instances 740-1, 740-2, has N3 and N6 interfaces. Deploying the first and second UPF gateway instances 740-1, 740-2 in this manner provides improved latency compared to user-plane traffic being, in effect, relayed to and from the UPF instance 725 through the first and second UPF gateway instances 740-1, 740-2.

Again, the N4 interfaces between the SMF 720 and the first and second UPF gateway instances 740-1, 740-2 do not allow the SMF 720 to indicate to the first and second UPF gateway instances 740-1, 740-2 which network slice a given PDU session belongs to. However, since the first UPF gateway instance 740-1 only serves the first network slice, all control-plane traffic it receives (from the SMF 720) belongs to the first network slice. Similarly, since the second UPF gateway instance 740-2 only serves the second network slice, all control-plane traffic it receives (from the SMF 720) belongs to the second network slice.

In this example, the interfaces between the first UPF gateway instance 740-1 and the UPF instance 725, and the second UPF gateway instance 740-2 and the UPF instance 725, comprise enhanced N4 interfaces. In this example, the enhanced N4 interfaces include the functionality of the N4 interface, but additionally enable the first and second UPF gateway instances 740-1, 740-2 to signal to the UPF instance 725 which network slice a given PDU session belongs. The first and second UPF gateway instances 740-1, 740-2 may signal the network slice to the UPF instance 725 by signalling a network slice identifier, for example using one or more S-NSSAIs. However, the network slice may be signalled in another manner. For example, the network slice may be signalled using different ports, additional metadata on first connection, and/or a slice identifier that is not the S-NSSAI. Using such a slice identifier may, for example, involve having a mapping on the first and/or second UPF gateway instances 740-1, 740-2 and the UPF instance 725.

As such, in this example, the Application Programming Interface (API) exposed by the UPF instance 725 is enhanced (relative to an N4 interface) and the UPF gateway element 740 comprising multiple UPF gateway instances 740-1, 740-2 is introduced. In this example, the UPF gateway element 740 interworks with the SMF 720 which, in this example, supports the N4 interface but does not support the enhanced API. The UPF instance 725 could, however, interface directly with the SMF 720 (and/or another SMF) if the SMF 720 (and/or the other SMF) supported the enhanced API.

In this example, there are multiple instances of the UPF gateway 740-1, 740-2; one for each slice. In this example, each UPF gateway 740-1, 740-2 instance has its own N4 network address (such as an IP address). To the rest of (the control-plane part of) the network 700, each UPF gateway instance 740-1, 740-2 appears to be a 'small' (in other words, single-slice) UPF instance, serving only one network slice. However, the packet-processing part of the UPF instance 725 is, in effect, shared across the UPF gateway instances 740-1, 740-2, which can provide latency reductions.

There is a perceived disadvantage in the art that processing different types of traffic (for example, belonging to different slices) by the same CPU will result in computational interference. However, the inventors have recognised that, in accordance with queuing theory, latency can be reduced by sharing a number, N, of UPF workloads over N processors compared to each of the N UPF workloads having its own dedicated processor. As a result, better latency can be achieved by deploying more UPF resource that serves multiple slices, whether a relatively large number of UPF instances each serving a relatively small number of slices or a relatively small number of UPF instances each serving a relatively large number of slices. In sum, from a queuing theory and latency perspective, the packet-processing part of the UPF instance 725 has a significant impact.

In addition, using a multi-slice UPF instance enables certain types of traffic to be given a higher priority than other types of traffic. For example, URLLC traffic may be given a higher priority than other types of traffic and can thereby get priority across multiple CPUs, with other, lower priority traffic being processed when there is no higher priority traffic. As such, the UPF instance 725 can prioritise processing of packet data belonging to one network slice over packet data belonging to another network slice.

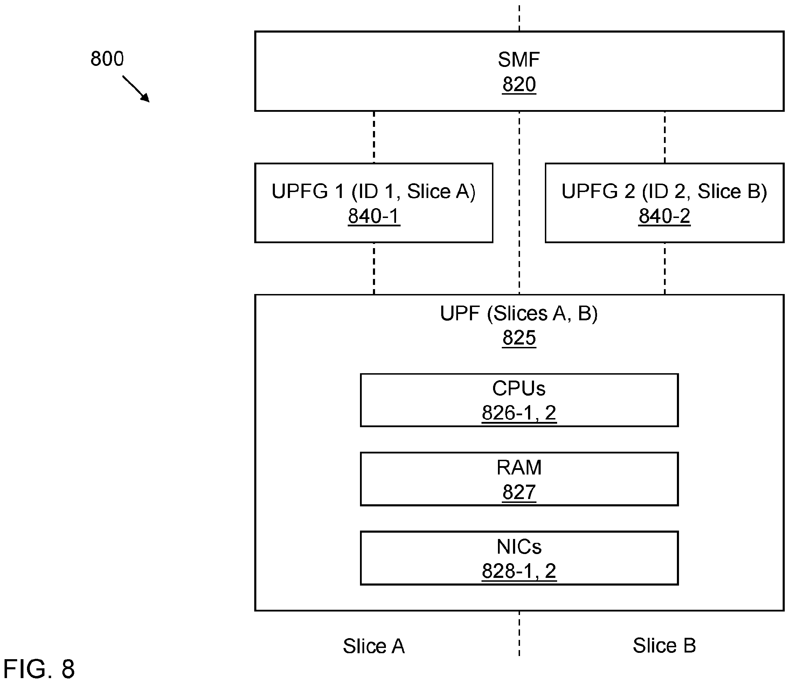

Referring to Figure 8, there is shown an example UPF instance 825.

The example UPF instance 825 is the same as or corresponds closely to the corresponding element of the example network 700 described above with reference to Figure 7 and is therefore indicated using the same reference numeral but incremented by 100.

In this example, the UPF instance 825 has access to a shared pool of resources including multiple processors 826-1, 826-2. The UPF instance 825 may have access to multiple NICs 828-1, 828-2. The shared pool of processors is shared across at least some (in other words, some or all) of the network slices served by the UPF instance 825. Having a common pool of UPF resource shared across several network slices, gives improved latency, with no loss of throughput, compared to multiple separate UPF instances each serving a single network slice (as described above with reference to Figures 5 and 6). In particular, the UPF instance 825 can process packet data belonging to a given network slice using multiple processors in the shared pool of processors 826-1, 826-2. For example, packet data belonging to the second network slice can be processed using both the first and second processors 826-1, 826-2. Similarly, the UPF instance 825 may process packet data belonging to the first network slice using both the first and second processors 826-1, 826-2. This differs from multiple single-slice UPF instances, each with its own dedicated processor, being used to process packet data belonging to the first and second network slices, where the UPF instance serving the first slice would process the packet data belonging to the first network slice using (only) its own dedicated processor and the UPF instance serving the second slice would process the packet data belonging to the second network slice using (only) its own dedicated processor. The multi-slice UPF instance 825 also allows more flexibility in terms of scaling down compute.

By way of a comparative example, it is assumed that each UPF instance uses at least one CPU core. In a network in which multiple, single-slice UPF instances are deployed, two network slices that each require 0.5 CPU core would require two separate UPF instances and hence two CPU cores. However, with the multi-slice UPF instance 825, both slices can be packed onto a single UPF instance, with only one CPU core being used. As such, separate UPF instances with separate, dedicated CPUs can result in low efficiency in terms of underuse of resources and increased energy use since more CPUs are being used. In contrast, in accordance with examples, latency is reduced by spreading processing over multiple CPUs. For simplicity, this example ignores High Availability (HA), but the gains scale accordingly.

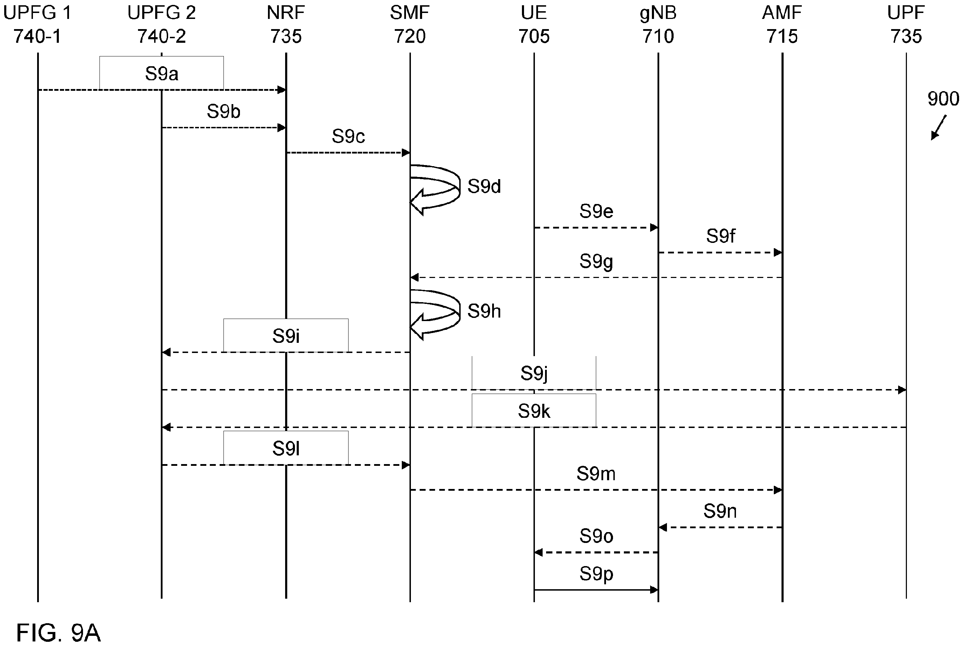

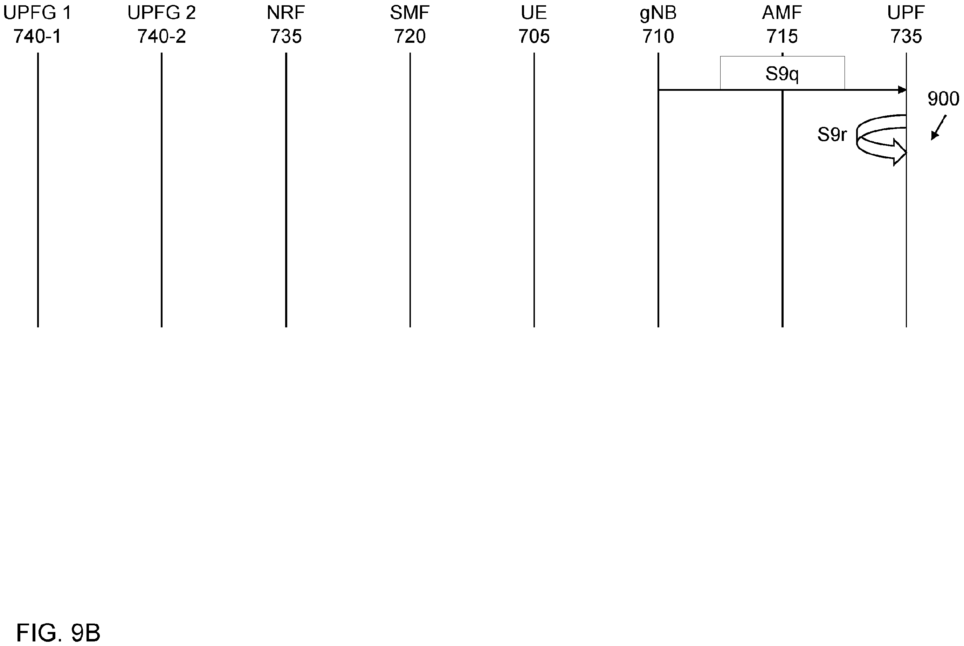

Referring to Figures 9a and 9b, there is shown an example of a method 900. In this example, the method 900 is implemented in the example network 700.

It is assumed that, prior to item S9a, the UPF instance 725 and the first and second UPF gateway instances 740-1, 740-2 have not yet been deployed in the network 700. It is also assumed that the SMF 720 has subscribed with the NRF 735 to be notified of any UPF instances in the network 700 that match target UPF Provisioning Information the SMF 720 is interested in and that the NRF 735 has notified the SMF 720 of the subset of the target Provisioning Information each such existing UPF instance supports.

Items S9a to S9d, correspond to SMF 720 provisioning of the first and second UPF gateway instances 740-1, 740-2 using the NRF 735.

At items S9a and S9b, the first and second UPF gateway instances 740-1, 740-2 are deployed in the network 700 and are each initially configured with (i) an identity of the NRF 735 to contact for registration, and (ii) respective UPF Provisioning Information. In this example, the UPF Provisioning Information identifies that the first and second UPF gateway instances 740-1, 740-2 support the first and second network slices respectively. In this example, the UPF Provisioning Information also identifies the network address of the N3 interface of the UPF instance 725. Each of the first and second UPF gateway instances 740-1, 740-2 is then registered with the NRF 735 by providing the NRF 725 with (i) the NF type (the NF type being UPF in this example), (ii) the FQDN or IP address of its N4 reference point, and (iii) the UPF Provisioning Information. In particular, the first and second UPF gateway instances 740-1, 740-2 each appear to the NRF 735 to be a UPF instance. However, as explained above, the first and second UPF gateway instances 740-1, 740-2 are control-plane-only elements, handling control-plane traffic but not user-plane traffic. In this example, the first and second UPF gateway instances 740-1, 740-2 do not have N3 and N6 interfaces, but provide the network address of the N3 interface of the UPF instance 725 for uplink user-plane traffic. As an alternative to the first and second UPF gateway instances 740-1, 740-2 registering with the NRF 735, OAM (not shown) may register the first and second UPF gateway instances 740-1, 740-2 on the NRF 735.

Examples described herein can support F-TEIDs being allocated by either CP Function or UP Function. If CP Function is used, the UPF Provisioning Information for each slice served by the UPF instance 725 can specify different N3 IP addresses for the UPF instance 725, to avoid a collision in the TEID spaces.

As such, in this example, each UPF gateway instance 740-1, 740-2 requests registration of the association between the network address of its N4 reference point and the network slice it serves. In this example, the network 700 causes the network address of the N4 reference point of each UPF gateway instance 740-1, 740-2 to be associated with a respective network slice. In this example, the association is stored in the NRF 735. However, the association may be stored elsewhere in the network 700 in other examples.

At item S9c and S9d, the SMF 720 is notified that the first and second UPF gateway instances 740-1, 740-2 support the first and second network slices respectively and associates the first and second UPF gateway instances 740-1, 740-2 with the first and second network slices respectively.

Items S9e to S9g correspond generally to items S2f to S2h respectively.

At item S9h, the SMF 720 selects a UPF gateway instance 740-1, 740-2 for the new PDU session which, in this example, is the second UPF gateway instance 740-2. In this example, the second UPF gateway instance 740-2 is selected at least on the basis that, in this example, the new PDU session relates to the second network slice, which is served by the second UPF gateway instance 740-2.

At items S9i to S9l, the SMF 720 and the second UPF gateway instance 740-2 exchange information over the N4 interface (between the SMF 720 and the second UPF gateway instance 740-2) related to establishment of the PDU session. The second UPF gateway instance 740-2 and the UPF instance 725 exchange corresponding information over the enhanced N4 interface between the second UPF gateway instance 740-2 and the UPF instance 725, with the second UPF gateway instance 740-2 additionally signalling that the PDU session to which the information being exchanged relates belongs to the second network slice. As such, when the UPF instance 725 later receives packet data for the PDU session, it can identify the particular PDU session and, based on identifying the particular PDU session, can determine that the packet data belongs to the second network slice and process the packet data accordingly. As explained above, the UPF instance 725 can identify a particular PDU session from the TEID (on the N3 side) and can identify a particular PDU session from a destination IP address (on the N6 side). The UPF instance 725 can look up the network slice to which the particular PDU session relates using the association between the PDU session identifier and network slice identifier from the PDU session establishment procedure.

Hence, a given UPF gateway instance (in this example, the second UPF gateway instance 740-2) has received information from the SMF 720 (in this example, via the N4 interface) relating to a given packet data session (which, in this example, is to be established) belonging to a given network slice (which, in this example, is the second network slice). In addition, the second UPF gateway instance 740-2 has, based on the information received from the SMF 720, signalled to the UPF instance 725 that the given packet data session belongs to the second network slice. In this example, the information received from the SMF 720 does not signal that the given packet data session belongs to the second network slice, but the second UPF gateway instance 740-2 has nevertheless signalled such to the UPF instance 725. The second UPF gateway instance 740-2 may signal to the UPF instance 725 that the given packet data session belongs to the second network slice by signalling a network slice identifier (such as an S-NSSAI) arranged to identify the second network slice and a packet data session identifier (such as a TEID) arranged to identify the second packet data session.

Items S9m to S9o correspond generally to items S2l to S2n respectively.

At items S9p and S9q, the UE 705 sends uplink packet data to the UPF instance 725 via the gNB 710, with the gNB 710 using the N3 interface with the UPF instance 725. At item S9r, the UPF instance 725 processes the uplink packet data, for example in accordance with the packet processing rule(s) provided by the SMF 720. The UPF instance 725 already has an association between the TEID for the PDU session and the second slice and so processes the uplink packet data in accordance with the second slice. After the packet processing at S9r, the UPF instance 725 outputs the (processed) uplink packet data for transmission to the DN 735.

In this example, the first and second UPF gateway instances 740-1, 740-2 each has an interface to the UPF instance 725 which, in this example, is an IP interface. In this example, the UPF instance 725 has a network address (in this example, an IP address) that both the first and second UPF gateway instances 740-1, 740-2 use. As such, in this example, the UPF instance 725 has a network address (in this example, an IP address) which is to be used to communicate information with the first and second UPF gateway instances 740-1, 740-2, and the network address of the UPF instance 725 is different from the network addresses of the N4 reference points of the first and second UPF gateway instances 740-1, 740-2. The UPF instance 725 could, in principle, respond directly to the SMF 720, bypassing the first and second UPF gateway instances 740-1, 740-2, but the SMF 720 may not recognize the IP address of the UPF instance 725 and may not accept the response. The first and second UPF gateway instances 740-1, 740-2 each know which network slice they are part of, so add an indication of the network slice into the signalling on the way to the UPF instance 725. Such network slice information is not present in the signalling from the SMF 720 to the first and second UPF gateway instances 740-1, 740-2.

The protocol between the SMF 720 and the first and second UPF gateway instances 740-1, 740-2 may, for example, be Packet Forwarding Control Protocol (PFCP) (binary over User Datagram Protocol (UDP)), which does not allow the network slice to be signalled. An extension to PFCP could be used for the enhanced interface between the first and second UPF gateway instances 740-1, 740-2 and the UPF instance 725 with an extra field for a network slice identifier. Alternatively, a proprietary format, such as a Service-Based format, could be used between the first and second UPF gateway instances 740-1, 740-2 and the UPF instance 725.

The above embodiments are to be understood as illustrative examples. Further embodiments are envisaged.

For example, rather than supporting multi-tenancy at the UPF instance level, multiple UPF instances using multi-tenancy at the virtualisation level may be deployed. However, virtual machine (VM)-level scheduling is relatively inefficient. For example, a multi-slice UPF instance described herein uses dedicated CPU cores to perform well and avoid VM scheduling overheads. As such, multi-tenancy at the virtualisation level may not perform as well as supporting multi-tenancy at the UPF instance level in practice.

In relation to current lack of API support for signalling the network slice to which a given PDU session relates, the 5G specifications could be changed such that the N4 interface allows a UPF instance to be told which slice a PDU session is for. This would enable the 5G specifications to embrace the performance benefits of UPF multi-tenancy described herein. Additionally, or alternatively, an SMF that is able to use the enhanced N4 interface described herein, can signal to the UPF instance which slice a PDU session is for. As such, various measures (for examples, networks, methods and computer programs) are provided in relation to a network that is configured to perform network slicing. An SMF is provided and so is a UPF instance configured to serve a plurality of network slices. The SMF is configured to signal, to the UPF instance, information relating to a given packet data session belonging to a given network slice served by the UPF instance. The UPF instance is configured to identify that the given packet data session belongs to the given network slice based on the signalling of the information. The information may comprise a network slice identifier arranged to identity the given network slice. Alternatively or additionally, different communication port numbers may be used to identify different slices. Such communication port numbers may be pre-agreed between the SMF and UPF instance. As such, the SMF can reliably signal to the (multi-slice) UPF instance which network slice given packet data belongs to.

In examples the at least one reference point of the UPF instance comprises an N6 reference point of the UPF instance.

In examples there is the network is configured such that the given UPF gateway instance receives control-plane traffic relating to the given packet data session and does not receive user-plane traffic belonging to the given packet data session.

In examples there is the given UPF gateway instance is configured to serve only the given network slice.

In examples at least some of the network slices correspond to different traffic profiles.

In examples there is a network according to the preceding paragraph, wherein at least one of the traffic profiles is for Ultra-Reliable Low-Latency Communication (URLLC) packet data.

## Claims

1. A method for implementing network slicing in a 5G network comprising a session management function, SMF, (720, 820), a user plane function, UPF, instance (725, 825) configured to serve a plurality of network slices (A,B), and a plurality of UPF gateway instances (740-1, 740-2), wherein a given UPF gateway instance is configured to serve a given network slice, wherein the UPF gateway instances are configured with UPF provisioning information identifying which UPF gateway instance is configured to serve a given network slice,
the method comprising:
selecting (S9h), by the SMF, one of the UPF gateway instances (740-2) for a Protocol Data Unit ,PDU, session;
exchanging (S9i, S9l), between the SMF and the selected UPF gateway instance, information related to establishment of the PDU session;
exchanging (S9j, S9k), over an enhanced N4 interface between the selected UPF gateway instance and the UPF instance, the information related to establishment of the PDU session;
in response to the UPF instance receiving (S9q) packet data for the PDU session, determining, by the UPF instance based on the information, that the received packet data belongs to the network slice associated with the selected UPF gateway instance; and
forwarding the packet data to the network slice associated with the selected UPF gateway instance.

2. The method according to claim 1, wherein the UPF instance has access to a shared pool of processors (826-1, 826-2), the shared pool of processors being shared across at least some of the plurality of network slices, and wherein the UPF instance is configured to process packet data belonging to the given network slice using multiple processors in the shared pool of processors.

3. The method according to any of claims 1 to 2, wherein the UPF instance is configured to prioritize processing of packet data belonging to one of the plurality of network slices over packet data belonging to another of the plurality of network slices.

4. The method according to any of claims 1 to 3, wherein the 5G network is configured to cause the association between a network address of the N4 reference point of the given UPF gateway instance and the given network slice to be stored in a Network Function Repository Function, NRF (735).

5. The method according to claim 4, wherein the given UPF gateway instance is configured to request registration of the association between the network address of the N4 reference point of the given UPF gateway instance and the given network slice.

6. The method according to claim 5, wherein the UPF instance is configured with a network address to be used to communicate information with the given UPF gateway instance, the network address of the UPF instance being different from the network address of the N4 reference point of the given UPF gateway instance.

7. The method according to any of claims 1 to 6, wherein the selected UPF gateway instance is configured to signal to the UPF instance that the PDU session belongs to the associated network slice by sending:
a network slice identifier arranged to identify the associated network slice; or
a packet data session identifier arranged to identify the PDU session.

8. The method according to any of claims 1 to 7, wherein the enhanced N4 interface comprises N4 interface functionality and is further configured to enable the selected UPF gateway instance to signal to the UPF instance that the PDU session belongs to the associated network slice.

9. The method according to any of claims 1 to 8, wherein the given UPF gateway instance is configured to provide the SMF with at least one network address to which packet data belonging to the PDU session is to be sent, and wherein the at least one network address to which packet data belonging to the PDU session is to be sent is for a reference point of the UPF instance.

10. The method according to claim 9, wherein the reference point of the UPF instance comprises an N3 reference point of the UPF instance or an N6 reference point of the UPF instance.

11. The method according to any of claims 1 to 10, wherein the selected UPF gateway instance receives control-plane traffic relating to the PDU session and does not receive user-plane traffic belonging to the PDU session.

12. The method according to any of claims 1 to 11, wherein at least some of the network slices correspond to different traffic profiles, wherein at least one of the traffic profiles is for Ultra-Reliable Low-Latency Communication, URLLC, packet data.

13. A system comprising:
one or more processors; and
a memory storing computer-readable instructions that, when executed by the one or more processors, cause the system to instantiate a session management function, SMF(720, 820), a user plane function, UPF, instance (725, 825) configured to serve a plurality of network slices (A, B), and a plurality of UPF gateway instances (740-1, 740-2), wherein a given UPF gateway instance is configured to serve a given network slice, wherein the UPF gateway instances are configured with UPF provisioning information identifying which UPF gateway instance is configured to serve a given network slice;
the computer-readable instructions, when executed by the one or more processors, further causing the system to perform operations comprising
selecting, by the SMF, one of the UPF gateway instances (740-2) for a Protocol Data Unit, PDU, session;
exchanging, between the SMF and the selected UPF gateway instance, information related to establishment of the PDU session;
exchanging, over an enhanced N4 interface between the selected UPF gateway instance and the UPF instance, the information related to establishment of the PDU session;
in response to the UPF instance receiving packet data for the PDU session, determining, by the UPF instance based on the information, that the received packet data belongs to the network slice associated with the selected UPF gateway instance; and
forwarding the packet data to the network slice associated with the selected UPF gateway instance.

14. A computer readable storage medium comprising instructions, which, when executed by a computing device, cause the computing device to perform operations for a network comprising a session management function, SMF (720, 820), a user plane function, UPF, instance configured to serve a plurality of network slices (A, B), and a plurality of UPF gateway instances (740-1, 740-2), wherein a given UPF gateway instance is configured to serve a given network slice, wherein the UPF gateway instances are configured with UPF provisioning information identifying which UPF gateway instance is configured to serve a given network slice;
the instructions, when executed by the computing device, further causing the computing device to perform operations comprising
selecting, by the SMF, one of the UPF gateway instances (740-2) for a Protocol Data Unit, PDU, session;
exchanging, between the SMF and the selected UPF gateway instance, information related to establishment of the PDU session;
exchanging, over an enhanced N4 interface between the selected UPF gateway instance and the UPF instance, the information related to establishment of the PDU session;
in response to the UPF instance receiving packet data for the PDU session, determining, by the UPF instance based on the information, that the received packet data belongs to the network slice associated with the selected UPF gateway instance; and
forwarding the packet data to the network slice associated with the selected UPF gateway instance.

## Patentansprüche

1. Verfahren zum Implementieren von Netzwerk-Slicing in einem 5G-Netz, das eine Sitzungsverwaltungsfunktion, SMF, (720, 820), eine Benutzerebenenfunktionsinstanz, UPF-Instanz, (725, 825), die konfiguriert ist, um eine Vielzahl von Netzwerk-Slices (A, B) zu bedienen, und eine Vielzahl von UPF-Gateway-Instanzen (740-1, 740-2) umfasst, wobei eine bestimmte UPF-Gateway-Instanz konfiguriert ist, um einen bestimmte Netzwerk-Slice zu bedienen, wobei die UPF-Gateway-Instanzen mit UPF-Bereitstellungsinformationen konfiguriert sind, die kennzeichnen, welche UPF-Gateway-Instanz konfiguriert ist, um einen bestimmte Netzwerk-Slice zu bedienen,
wobei das Verfahren umfasst:
Auswählen (S9h), durch die SMF, einer der UPF-Gateway-Instanzen (740-2) für eine Protokolldateneinheitensitzung PDU-Sitzung;
Austauschen (S9i, S9l), zwischen der SMF und der ausgewählten UPF-Gateway-Instanz, von Informationen, die die Einrichtung der PDU-Sitzung betreffen;
Austauschen (S9j, S9k), über eine erweiterte N4-Schnittstelle zwischen der ausgewählten UPF-Gateway-Instanz und der UPF-Instanz, der Informationen, die die Einrichtung der PDU-Sitzung betreffen;
als Reaktion darauf, dass die UPF-Instanz Paketdaten für die PDU-Sitzung empfängt (S9q), Feststellen durch die UPF-Instanz basierend auf den Informationen, dass die empfangenen Paketdaten zu dem Netzwerk-Slice gehören, der der ausgewählten UPF-Gateway-Instanz zugeordnet ist; und
Weiterleiten der Paketdaten zu dem Netzwerk-Slice, der der ausgewählten UPF-Gateway-Instanz zugeordnet ist.

2. Verfahren nach Anspruch 1, wobei die UPF-Instanz Zugriff auf einen gemeinsam genutzten Prozessorpool (826-1, 826-2) hat, wobei der gemeinsam genutzte Prozessorpool durch mindestens einige der Vielzahl von Netzwerk-Slices gemeinsam genutzt wird und wobei die UPF-Instanz konfiguriert ist, um Paketdaten, die zu dem bestimmten Netzwerk-Slice gehören, unter Verwendung mehrerer Prozessoren in dem gemeinsam genutzten Prozessorpool zu verarbeiten.

3. Verfahren nach einem der Ansprüche 1 bis 2, wobei die UPF-Instanz konfiguriert ist, um die Verarbeitung von Paketdaten, die zu einem der Vielzahl von Netzwerk-Slices gehören, gegenüber Paketdaten zu priorisieren, die zu einem anderen der Vielzahl von Netzwerk-Slices gehören.

4. Verfahren nach einem der Ansprüche 1 bis 3, wobei das 5G-Netz konfiguriert ist, um die Zuordnung zwischen einer Netzwerkadresse des N4-Referenzpunkts der bestimmten UPF-Gateway-Instanz und dem bestimmten Netzwerk-Slice in einer Netzwerkfunktion-Datendepotfunktion, NRF (735), zu speichern.

5. Verfahren nach Anspruch 4, wobei die bestimmte UPF-Gateway-Instanz konfiguriert ist, um eine Registrierung der Zuordnung zwischen der Netzwerkadresse des N4-Referenzpunkts der bestimmten UPF-Gateway-Instanz und dem bestimmten Netzwerk-Slice anfordert.

6. Verfahren nach Anspruch 5, wobei die UPF-Instanz mit einer Netzwerkadresse konfiguriert ist, die zum Übermitteln von Informationen an die gegebene UPF-Gateway-Instanz verwendet werden soll, wobei sich die Netzwerkadresse der UPF-Instanz von der Netzwerkadresse des N4-Referenzpunkts der bestimmten UPF-Gateway-Instanz unterscheidet.

7. Verfahren nach einem der Ansprüche 1 bis 6, wobei die ausgewählte UPF-Gateway-Instanz konfiguriert ist, um der UPF-Instanz signalisiert, dass die PDU-Sitzung zu dem zugeordneten Netzwerk-Slice gehört, indem sie sendet:
eine Netzwerk-Slice-Kennung zum Kennzeichnen des zugehörigen Netzwerk-Slice; oder
eine Paketdatensitzungskennung zum Kennzeichnen der PDU-Sitzung.

8. Verfahren nach einem der Ansprüche 1 bis 7, wobei die erweiterte N4-Schnittstelle eine N4-Schnittstellenfunktionalität umfasst und ferner konfiguriert ist, um der der ausgewählten UPF-Gateway-Instanz zu ermöglichen, der UPF-Instanz zu signalisieren, dass die PDU-Sitzung zu dem zugeordneten Netzwerk-Slice gehört.

9. Verfahren nach einem der Ansprüche 1 bis 8, wobei die bestimmte UPF-Gateway-Instanz konfiguriert ist, um der SMF mindestens eine Netzwerkadresse bereitzustellen, an die Paketdaten gesendet werden sollen, die zu der PDU-Sitzung gehören, und wobei die mindestens eine Netzwerkadresse, an die Paketdaten gesendet werden sollen, die zu der PDU-Sitzung gehören, ein Referenzpunkt der UPF-Instanz ist.

10. Verfahren nach Anspruch 9, wobei der Referenzpunkt der UPF-Instanz einen N3-Referenzpunkt der UPF-Instanz oder einen N6-Referenzpunkt der UPF-Instanz umfasst.

11. Verfahren nach einem der Ansprüche 1 bis 10, wobei die ausgewählte UPF-Gateway-Instanz Steuerebenenverkehr empfängt, der die PDU-Sitzung betrifft, und keinen Benutzerebenenverkehr empfängt, der zu der PDU-Sitzung gehört.

12. Verfahren nach einem der Ansprüche 1 bis 11, wobei mindestens einige der Netzwerk-Slices unterschiedlichen Verkehrsprofilen entsprechen, wobei mindestens eines der Verkehrsprofile für Paketdaten der ultrazuverlässigen Kommunikation mit geringer Latenz, URLLC-Paketdaten bestimmt ist.

13. System, umfassend:
einen oder mehrere Prozessoren; und
einen Speicher, der computerlesbare Anweisungen speichert, die, wenn sie durch den einen oder die mehreren Prozessoren ausgeführt werden, das System veranlassen, eine Sitzungsverwaltungsfunktion, SMF (720, 820), eine Benutzerebenenfunktionsinstanz, UPF-Instanz (725, 825) zu instanziieren, die konfiguriert ist, um eine Vielzahl von Netzwerk-Slices (A, B) zu bedienen, und eine Vielzahl von UPF-Gateway-Instanzen (740-1, 740-2) zu instanziieren, wobei eine bestimmte UPF-Gateway-Instanz konfiguriert ist, um einen bestimmten Netzwerk-Slice zu bedienen, wobei die UPF-Gateway-Instanzen mit UPF-Bereitstellungsinformationen konfiguriert sind, die kennzeichnen, welche UPF-Gateway-Instanz konfiguriert ist, um einen bestimmten Netzwerk-Slice zu bedienen;
die computerlesbaren Anweisungen, die, wenn sie durch den einen oder die mehreren Prozessoren ausgeführt werden, das System ferner veranlassen,
Operationen durchzuführen, die umfassen:
Auswählen, durch die SMF, einer der UPF-Gateway-Instanzen (740-2) für eine Protokolldateneinheitensitzung, PDU-Sitzung;
Austauschen, zwischen der SMF und der ausgewählten UPF-Gateway-Instanz, von Informationen, die die Einrichtung der PDU-Sitzung betreffen;
Austauschen, über eine erweiterte N4-Schnittstelle zwischen der ausgewählten UPF-Gateway-Instanz und der UPF-Instanz, der Informationen, die die Einrichtung der PDU-Sitzung betreffen;
als Reaktion darauf, dass die UPF-Instanz Paketdaten für die PDU-Sitzung empfängt, Feststellen durch die UPF-Instanz basierend auf den Informationen, dass die empfangenen Paketdaten zu dem Netzwerk-Slice gehören, der der ausgewählten UPF-Gateway-Instanz zugeordnet ist; und
Weiterleiten der Paketdaten zu dem Netzwerk-Slice, der der ausgewählten UPF-Gateway-Instanz zugeordnet ist.

14. Computerlesbares Speichermedium, das Anweisungen umfasst, die, wenn sie durch eine Datenverarbeitungsvorrichtung ausgeführt werden, die Datenverarbeitungsvorrichtung veranlassen, Operationen für ein Netzwerk durchzuführen, das eine Sitzungsverwaltungsfunktion, SMF (720, 820), eine Benutzerebenenfunktionsinstanz, UPF-Instanz, die konfiguriert ist, um eine Vielzahl von Netzwerk-Slices (A, B) zu bedienen, und eine Vielzahl von UPF-Gateway-Instanzen (740-1, 740-2) umfasst, wobei eine bestimmte UPF-Gateway-Instanz konfiguriert ist, um einen bestimmten Netzwerk-Slice zu bedienen, wobei die UPF-Gateway-Instanzen mit UPF-Bereitstellungsinformationen konfiguriert sind, die kennzeichnen, welche UPF-Gateway-Instanz konfiguriert ist, um einen bestimmten Netzwerk-Slice zu bedienen;
die Anweisungen, wenn sie durch die Datenverarbeitungsvorrichtung ausgeführt werden, die Datenverarbeitungsvorrichtung ferner veranlassen, um Operationen durchzuführen, die umfassen:
Auswählen, durch die SMF, einer der UPF-Gateway-Instanzen (740-2) für eine Protokolldateneinheitensitzung, PDU-Sitzung;
Austauschen, zwischen der SMF und der ausgewählten UPF-Gateway-Instanz, von Informationen, die die Einrichtung der PDU-Sitzung betreffen;
Austauschen, über eine erweiterte N4-Schnittstelle zwischen der ausgewählten UPF-Gateway-Instanz und der UPF-Instanz, der Informationen, die die Einrichtung der PDU-Sitzung betreffen;
als Reaktion darauf, dass die UPF-Instanz Paketdaten für die PDU-Sitzung empfängt, Feststellen durch die UPF-Instanz basierend auf den Informationen, dass die empfangenen Paketdaten zu dem Netzwerk-Slice gehören, der der ausgewählten UPF-Gateway-Instanz zugeordnet ist; und
Weiterleiten der Paketdaten zu dem Netzwerk-Slice, der der ausgewählten UPF-Gateway-Instanz zugeordnet ist.

## Revendications

1. Procédé de mise en oeuvre d'un découpage de réseau dans un réseau 5G comprenant une fonction de gestion de session, SMF, (720, 820), une instance de fonction de plan utilisateur, UPF, (725, 825) configurée pour desservir une pluralité de tranches de réseau (A, B), et une pluralité d'instances de passerelle UPF (740-1, 740-2), une instance de passerelle UPF donnée étant configurée pour desservir une tranche de réseau donnée, les instances de passerelle UPF étant configurées avec des informations de provisionnement UPF identifiant quelle instance de passerelle UPF est configurée pour desservir une tranche de réseau donnée,
le procédé comprenant :
la sélection (S9h), par la SMF, d'une des instances de passerelle UPF (740-2) pour une session d'unité de données de protocole, PDU ;
l'échange (S9i, S9l), entre la SMF et l'instance de passerelle UPF sélectionnée, d'informations relatives à l'établissement de la session PDU ;
l'échange (S9j, S9k), sur une interface N4 améliorée entre l'instance de passerelle UPF sélectionnée et l'instance UPF, des informations relatives à l'établissement de la session PDU ;
en réponse à la réception par l'instance UPF (S9q) de données de paquet pour la session PDU, la détermination, par l'instance UPF sur la base des informations, du fait que les données de paquet reçues appartiennent à la tranche de réseau associée à l'instance de passerelle UPF sélectionnée ; et
la transmission des données de paquet à la tranche de réseau associée à l'instance de passerelle UPF sélectionnée.

2. Procédé selon la revendication 1, dans lequel l'instance UPF a accès à un groupe partagé de processeurs (826-1, 826-2), le groupe partagé de processeurs étant partagé sur au moins certaines de la pluralité de tranches de réseau, et dans lequel l'instance UPF est configurée pour traiter les données de paquet appartenant à la tranche de réseau donnée à l'aide de plusieurs processeurs dans le groupe partagé de processeurs.

3. Procédé selon l'une quelconque des revendications 1 et 2, dans lequel l'instance UPF est configurée pour donner la priorité au traitement des données de paquet appartenant à une de la pluralité de tranches de réseau par rapport aux données de paquet appartenant à une autre de la pluralité de tranches de réseau.

4. Procédé selon l'une quelconque des revendications 1 à 3, dans lequel le réseau 5G est configuré pour provoquer le stockage de l'association entre une adresse réseau du point de référence N4 de l'instance de passerelle UPF donnée et la tranche de réseau donnée dans une fonction de référentiel de fonction réseau, NRF (735).

5. Procédé selon la revendication 4, dans lequel l'instance de passerelle UPF donnée est configurée pour demander l'enregistrement de l'association entre l'adresse réseau du point de référence N4 de l'instance de passerelle UPF donnée et la tranche de réseau donnée.

6. Procédé selon la revendication 5, dans lequel l'instance UPF est configurée avec une adresse réseau à utiliser pour communiquer des informations avec l'instance de passerelle UPF donnée, l'adresse réseau de l'instance UPF étant différente de l'adresse réseau du point de référence N4 de l'instance de passerelle UPF donnée.

7. Procédé selon l'une quelconque des revendications 1 à 6, dans lequel l'instance de passerelle UPF sélectionnée est configurée pour signaler à l'instance UPF que la session PDU appartient à la tranche de réseau associée en envoyant :
un identifiant de tranche de réseau conçu pour identifier la tranche de réseau associée ; ou
un identifiant de session de données de paquet agencé pour identifier la session PDU.

8. Procédé selon l'une quelconque des revendications 1 à 7, dans lequel l'interface N4 améliorée comprend une fonctionnalité d'interface N4 et est en outre configurée pour permettre à l'instance de passerelle UPF sélectionnée de signaler à l'instance UPF que la session PDU appartient à la tranche de réseau associée.

9. Procédé selon l'une quelconque des revendications 1 à 8, dans lequel l'instance de passerelle UPF donnée est configurée pour fournir à la SMF au moins une adresse réseau à laquelle les données de paquet appartenant à la session PDU doivent être envoyées, et dans lequel l'au moins une adresse réseau à laquelle les données de paquet appartenant à la session PDU doivent être envoyées est destinée à un point de référence de l'instance UPF.

10. Procédé selon la revendication 9, dans lequel le point de référence de l'instance UPF comprend un point de référence N3 de l'instance UPF ou un point de référence N6 de l'instance UPF.

11. Procédé selon l'une quelconque des revendications 1 à 10, dans lequel l'instance de passerelle UPF sélectionnée reçoit le trafic de plan de commande relatif à la session PDU et ne reçoit pas le trafic de plan utilisateur appartenant à la session PDU.

12. Procédé selon l'une quelconque des revendications 1 à 11, dans lequel au moins certaines des tranches de réseau correspondent à différents profils de trafic, dans lequel au moins un des profils de trafic est destiné à un paquet de départ de communication ultra-fiable à faible latence, URLLC.

13. Système comprenant :
un ou plusieurs processeurs ; et
une mémoire stockant des instructions lisibles par ordinateur qui, lorsqu'elles sont exécutées par le ou les processeurs, amènent le système à instancier une fonction de gestion de session, SMF (720, 820), une instance de fonction de plan utilisateur, UPF, (725, 825) étant configurée pour desservir une pluralité de tranches de réseau (A, B) et une pluralité d'instances de passerelle UPF (740-1, 740-2), une instance de passerelle UPF donnée étant configurée pour desservir une tranche de réseau donnée, les instances de passerelle UPF étant configurées avec des informations de provisionnement UPF identifiant quelle instance de passerelle UPF est configurée pour desservir une tranche de réseau donnée ;
les instructions lisibles par ordinateur, lorsqu'elles sont exécutées par le ou les processeurs, amenant en outre le système à effectuer des opérations comprenant la sélection, par la SMF, d'une des instances de passerelle UPF (740-2) pour une session d'unité de données de protocole, PDU ;
l'échange, entre la SMF et l'instance de passerelle UPF sélectionnée, d'informations relatives à l'établissement de la session PDU ;
l'échange, sur une interface N4 améliorée entre l'instance de passerelle UPF sélectionnée et l'instance UPF, des informations relatives à l'établissement de la session PDU ;
en réponse à la réception par l'instance UPF de données de paquet pour la session PDU, la détermination, par l'instance UPF sur la base des informations, du fait que les données de paquet reçues appartiennent à la tranche de réseau associée à l'instance de passerelle UPF sélectionnée ; et
la transmission des données de paquet à la tranche de réseau associée à l'instance de passerelle UPF sélectionnée.

14. Support d'enregistrement lisible par ordinateur comprenant des instructions qui, lorsqu'elles sont exécutées par un dispositif informatique, amènent le dispositif informatique à effectuer des opérations pour un réseau comprenant une fonction de gestion de session, SMF (720, 820), une instance de fonction de plan utilisateur, UPF, étant configurée pour desservir une pluralité de tranches de réseau (A, B) et une pluralité d'instances de passerelle UPF (740-1, 740-2), une instance de passerelle UPF donnée étant configurée pour desservir une tranche de réseau donnée, les instances de passerelle UPF étant configurées avec des informations de provisionnement UPF identifiant quelle instance de passerelle UPF est configurée pour desservir une tranche de réseau donnée ;
les instructions, lorsqu'elles sont exécutées par le dispositif informatique, amènent en outre le dispositif informatique à effectuer des opérations comprenant la sélection, par la SMF, d'une des instances de passerelle UPF (740-2) pour une session d'unité de données de protocole, PDU ;
l'échange, entre la SMF et l'instance de passerelle UPF sélectionnée, d'informations relatives à l'établissement de la session PDU ;
l'échange, sur une interface N4 améliorée entre l'instance de passerelle UPF sélectionnée et l'instance UPF, des informations relatives à l'établissement de la session PDU ;
en réponse à la réception par l'instance UPF de données de paquet pour la session PDU, la détermination, par l'instance UPF sur la base des informations, du fait que les données de paquet reçues appartiennent à la tranche de réseau associée à l'instance de passerelle UPF sélectionnée ; et
la transmission des données de paquet à la tranche de réseau associée à l'instance de passerelle UPF sélectionnée.
